# EUROPEAN PATENT APPLICATION

(11) **EP 1 515 026 A2**
(43) Date of publication of application: **16.03.2005**
(21) Application number: 04019718.8
(22) Date of filing: 19.08.2004
(51) Int. Cl.: F02D 41/02, F01N 3/08

(54) **Method and apparatus for controlling temperature of catalyst and engine system having the apparatus**

(30) Priority: 12.09.2003 JP 2003320548
(71) Applicant: Hitachi, Ltd., Chiyoda-ku, Tokyo 101-8010 (JP)
(72) Inventor: Nakagawa, Shinji Hitachi, Ltd., Chiyoda-ku Tokyo 100-8220 (JP); Katogi, Kozo Hitachi, Ltd., Chiyoda-ku Tokyo 100-8220 (JP); Nagano, Masami Hitachi, Ltd., Chiyoda-ku Tokyo 100-8220 (JP)
(74) Representative: Beetz & Partner Patentanwälte

(57) **Abstract**

The invention relates to an HC absorption combustion catalyst (11) that is provided in the exhaust pipe (10) of an internal combustion engine (9) and shifts from an HC absorption phase to an HC purification phase through an HC release phase as a temperature of the HC absorption combustion catalyst (11) increases from a low value to a high value. The temperature of the HC absorption combustion catalyst (11) is controlled in accordance with the HC absorption phase, the HC release phase and the HC purification phase.

## Description

### BACKGROUND OF THE INVENTION

The present invention relates to a method and apparatus for controlling the temperature of an HC absorption combustion catalyst and an engine system provided with the temperature control apparatus and, in particular, relates to a method and apparatus for controlling the temperature of an HC absorption combustion catalyst and an engine system which absorb HC with high efficiency to purify exhaust gas by using the HC absorption combustion catalyst upon starting an engine.

In general, the exhaust pipe of an internal combustion engine (hereinafter merely referred as an engine) is provided with a three way catalyst having a function of oxidizing HC and CO and deoxidizing NOx exhausted from the engine in order to reduce exhaust gas. The three way catalyst exerts the purification function of HC, CO and NOx at temperatures equal to or higher than the predetermined catalyst temperature but can not purify these gases sufficiently at temperatures lower than the predetermined catalyst temperature. Thus, since the catalyst temperature of the three way catalyst is low at the time of starting the engine, the purification efficiency of the three way catalyst is low during a period where the catalyst temperature increases to the predetermined catalyst temperature or more.

In contrast, as an effective means for reducing the HC density during the inactive period of the three way catalyst, there is an HC absorption combustion catalyst. The HC absorption combustion catalyst has the function of absorbing within the catalyst HC exhausted from the engine when the catalyst temperature is low (HC absorption phase), releasing HC when the catalyst temperature is a predetermined value or more (HC release phase),and oxidizing HC thus released due to the function of the three way catalyst held within the HC absorption combustion catalyst when the catalyst temperature is a predetermined high value or more (HC purification (combustion) phase).

That is, in order to reduce HC with high efficiency by using the HC absorption combustion catalyst at the time of starting the engine, it is important to absorb HC from the engine with high efficiency in the HC absorption phase, to reduce the released HC by shifting to the HC purification phase quickly in the HC release phase, and to purify the released HC with high efficiency in the HC purification (combustion) phase.

For example, JP-A-11-343832 describes that the temperature of a catalyst is raised near the HC release start temperature of HC absorbent when exhaust temperature is low. Further, JP-A-5-44447 describes that secondary air is supplied to cool HC absorbent thereby to improve absorption efficiency.

### SUMMARY OF THE INVENTION

However, the aforesaid conventional techniques do not consider to control temperature history in each phase of the HC absorption combustion catalyst, so that there arises a problem that HC can not be absorbed with high efficiency particularly at the time of starting an engine.

The present invention has been made in view of the aforesaid problem and an object of the present invention is provide a method and apparatus for controlling the temperature of an HC absorption combustion catalyst and an engine system which can absorb HC with high efficiency to purify exhaust gas by using the HC absorption combustion catalyst.

In order to attain the aforesaid object, the present invention controls the temperature of the HC absorption combustion catalyst in accordance with the respective phases thereof. To be more concrete, the temperature of the catalyst is controlled in a manner that the efficiency of the catalyst becomes high at the respective phases of the catalyst.

The temperature of the HC absorption combustion catalyst may be controlled by switching the temperature increasing rate of the HC absorption combustion catalyst in accordance with the respective phases. Preferably, the temperature increasing rate of the HC absorption combustion catalyst at a time of the HC absorption phase of the HC absorption combustion catalyst is made smaller than the temperature increasing rate of the HC absorption combustion catalyst at a time of the HC release phase of the HC absorption combustion catalyst. When constituted in this manner, the temperature of the HC absorption combustion catalyst is increased gently after starting the engine, whereby an amount of the absorption of HC can be increased since a sufficient time period for the HC absorption phase is secured. Further, when the temperature of the HC absorption combustion catalyst exceeds the maximum temperature of the HC absorption phase, the temperature of the absorption combustion catalyst may be increased rapidly to the temperature of the purification phase, whereby an amount of released HC in the release phase can be reduced.

The catalyst temperature control apparatus may include: a temperature gentle increase control unit which increases a temperature of the HC absorption combustion catalyst at a first increasing rate *;* a temperature rapid increase control unit which increases the temperature of the HC absorption combustion catalyst at a rate larger than the first increasing rate ; a temperature gentle/rapid increase control determination unit for determining one of the temperature gentle increase control unit and the temperature rapid increase control unit which performs temperature control of the HC absorption combustion catalyst; and/or a temperature gentle/rapid increase control switching unit which switches between the temperature gentle increase control unit and the temperature rapid increase control unit in accordance with determination result of the temperature gentle/rapid increase control determination unit.

Preferably, the temperature gentle/rapid increase control determination unit may be constituted by a lapse time measuring unit for measuring a time period lapsed after start of the engine, and/or a determination unit for determining whether or not the lapse time after the start of the engine measured by the lapse time measuring unit exceeds a predetermined value. That is, since a time period lapsed after start of the engine is correlated with the temperature of the HC absorption combustion catalyst, the respective phases of the HC absorption combustion catalyst can be determined based on the time period lapsed after start of the engine, whereby the temperature of the HC absorption combustion catalyst can be controlled.

Preferably, the temperature gentle/rapid increase control determination unit may be constituted by a catalyst temperature detecting unit for detecting temperature of the HC absorption combustion catalyst and/or a determination unit for determining whether or not the temperature of the HC absorption combustion catalyst detected by the catalyst temperature detecting unit exceeds a predetermined value. That is, the respective phases of the HC absorption combustion catalyst can be determined with a high accuracy by directly or indirectly detecting the temperature of the HC absorption combustion catalyst, whereby the temperature of the HC absorption combustion catalyst can be controlled.

Preferably, the temperature gentle/rapid increase control determination unit may be constituted by an air flow rate detecting unit for detecting a flow rate of air flowing into the engine and/or a determination unit for determining whether or not the air flow rate detected by the air flow rate detecting unit exceeds a predetermined value. That is, when a flow rate of the air flowing into the engine is small, the temperature gentle increase control can be easily realized, whilst when a flow rate of the air flowing into the engine is large, the temperature rapid increase control can be easily realized. In this manner, the temperature of the HC absorption combustion catalyst can be controlled in accordance with the air flow rate.

Preferably, the temperature gentle increase control unit may include a circulation pipe for circulating exhaust gas from the engine to a suction side of the engine, a circulation valve for adjusting circulation rate of the exhaust gas and/or a circulation valve control means for controlling the circulation valve. That is, when the exhaust gas is circulated, the combustion temperature of the HC absorption combustion catalyst reduces, so that these constituent elements can be used as the temperature gentle increase control unit.

Preferably, the temperature rapid increase control unit may control so as to retard an ignition timing, and/or control so that air fuel ratios of respective cylinders of the engine are differentiated in rich and lean states respectively, and/or control so as to burn unburned HC within the exhaust pipe by introducing air or 02 within the exhaust pipe.

There may be provided an engine system which includes: an internal combustion engine; an HC absorption combustion catalyst which is provided in an exhaust pipe of the engine and which shifts from an HC absorption phase to an HC purification phase through an HC release phase as a temperature of the HC absorption combustion catalyst increases from a low value to a high value; and/or a catalyst temperature control apparatus for controlling a temperature of the HC absorption combustion catalyst in accordance with the HC absorption phase, the HC release phase and the HC purification phase.

Preferably, the engine is a lean burn engine in which combustion is performed with air fuel mixture having an air fuel ratio thinner than a stoichiometric air-fuel ratio. The catalyst temperature control apparatus may include a lean combustion allowance unit which determines to allow lean combustion for the lean burn engine, a target ignition timing calculation unit for calculating a target ignition timing based on the determination result of the lean combustion allowance unit, a target fuel injection value/fuel injection timing calculation unit for calculating a target fuel injection amount and a target fuel injection timing based on the determination result of the lean combustion allowance unit, a target air flow rate calculation unit for calculating a target air amount based on the determination result of the lean combustion allowance unit, an ignition timing control device for controlling an ignition timing based on the calculation result of the target ignition timing calculation unit, fuel injection valves for controlling fuel injection value and fuel injection timing based on the calculation result of the target fuel injection value/fuel injection timing calculation unit, and/or an air flow rate control device for controlling an air flow rate based on the calculation result of the target air flow rate calculation unit. That is, when the lean combustion is performed, the combustion temperature of the HC absorption combustion catalyst can be reduced, so that these constituent elements can be used as the temperature gentle increase control unit of the HC absorption combustion catalyst. Further, in order to perform the lean combustion, the air flow rate, the fuel injection value or the ignition timing may be required to be controlled optimally.

Preferably, the catalyst temperature control apparatus may be arranged in a manner that the HC absorption combustion catalyst is disposed at such a position that the temperature of the HC absorption combustion catalyst is the temperature of the HC absorption phase during a predetermined time period after start of the engine in which HC can be absorbed within the HC absorption combustion catalyst. That is, the temperature history of the HC absorption combustion catalyst is adjusted depending on the disposed position thereof so that the HC absorption combustion catalyst can exert its function efficiently at each of the absorption, release and purification phases of the HC absorption combustion catalyst.

Preferably, a three way catalyst may be provided on the upstream side of the HC absorption combustion catalyst. The catalyst temperature control apparatus may be arranged in a manner that the HC absorption combustion catalyst is disposed at such a position that the temperature of the HC absorption combustion catalyst is the temperature of the HC absorption phase until the temperature of the three way catalyst reaches a temperature at which purification function of the three way catalyst starts. That is, when the three way catalyst is provided on the upstream side of the HC absorption combustion catalyst, the disposed position of the three way catalyst is adjusted in a manner that the HC absorption combustion catalyst is placed in the HC absorption phase while the three way catalyst is in a non-activation state.

### BRIEF DESCRIPTION OF THE DRAWINGS

Fig. 1 is a diagram showing the basic concept of the present invention.
Fig. 2 is a diagram showing the characteristics of an HC absorption combustion catalyst.
Fig. 3 is a diagram showing the basic concept of the present invention.
Fig. 4 is a diagram showing the first concrete configuration of the temperature gentle/rapid increase control determination unit of a catalyst temperature control unit.
Fig. 5 is a diagram showing the second concrete configuration of the temperature gentle/rapid increase control determination unit of the catalyst temperature control unit.
Fig 6 is a diagram showing the third concrete configuration of the temperature gentle/rapid increase control determination unit of the catalyst temperature control unit.
Fig. 7 is a diagram showing the basic concept of the present invention.
Fig. 8 is a diagram showing the gist of the engine system of the embodiment of the present invention.
Fig 9 is a diagram showing the inside of a control unit.
Fig. 10 is a diagram showing the control program written into a ROM.
Fig. 11 is a diagram showing a target EGR valve opening degree calculation unit.
Fig. 12 is a diagram showing a target equivalent ratio calculation unit.
Fig. 13 is a diagram showing a target ignition timing calculation unit.
Fig. 14 is a diagram showing the concrete configuration of a catalyst temperature control unit.

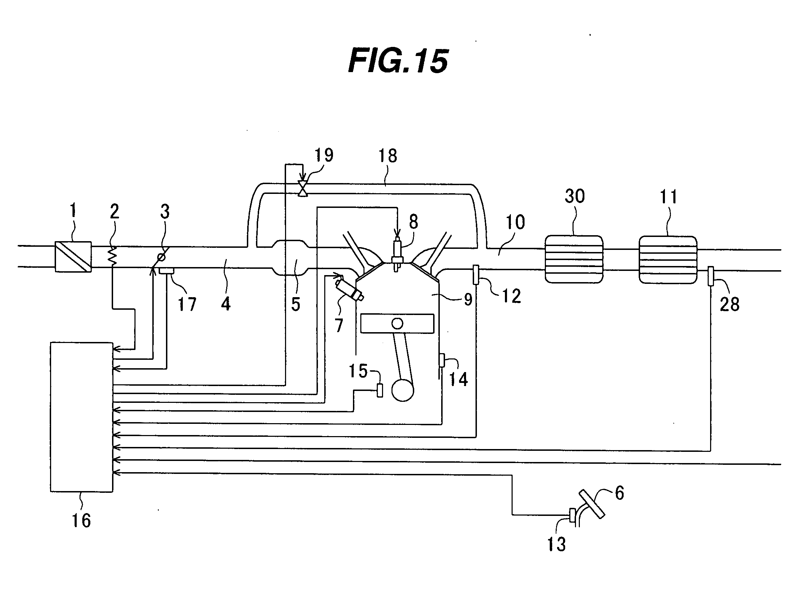

Fig. 15 is a diagram showing the gist of the engine system of the embodiment of the present invention.
Fig. 16 is a diagram showing a target fuel injection value calculation unit.
Fig. 17 is a diagram showing a rich/lean control allowance determination unit.
Fig. 18 is a diagram showing a first cylinder A/F correction value calculation unit.
Fig. 19 is a diagram showing a second cylinder A/F correction value calculation unit.
Fig. 20 is a diagram showing a third cylinder A/F correction value calculation unit.

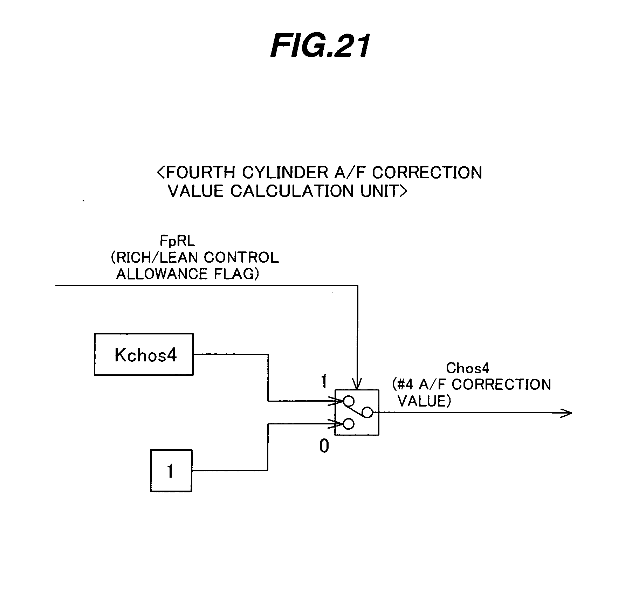

Fig. 21 is a diagram showing a fourth cylinder A/F correction value calculation unit.
Fig. 22 is a diagram for explaining the positional adjustment of an HC absorption combustion catalyst.
Fig. 23 is a diagram for explaining the positional adjustment of the HC absorption combustion catalyst.

### DETAILED DESCRIPTION OF THE INVENTION

The concept of the present invention will be explained with reference to the accompanying drawings before explaining an embodiment of the present invention.

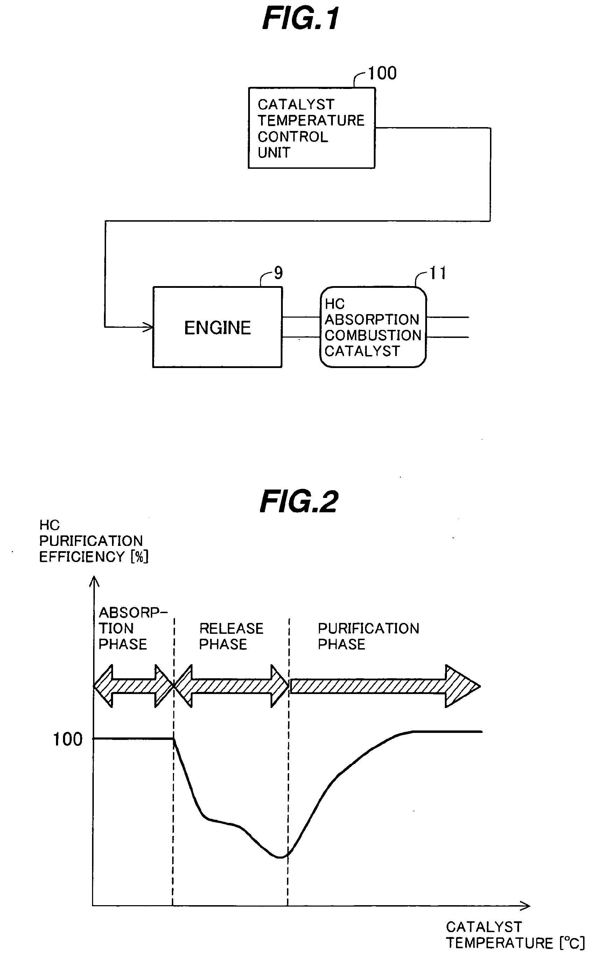

Fig. 1 shows the basic concept of the present invention, in which an HC absorption combustion catalyst 11 is provided at the exhaust pipe of an engine 9 and a catalyst temperature control unit 100 controls the temperature of the HC absorption combustion catalyst 11.

As shown in Fig. 2, the HC absorption combustion catalyst 11 has characteristics of shifting from an HC absorption phase to an HC purification phase through an HC release phase as the catalyst temperature increases from a low value to a high value.

The catalyst temperature control unit 100 shown in Fig. 1 controls the catalyst temperature so that the catalyst efficiency in each phase of the HC absorption combustion catalyst becomes high.

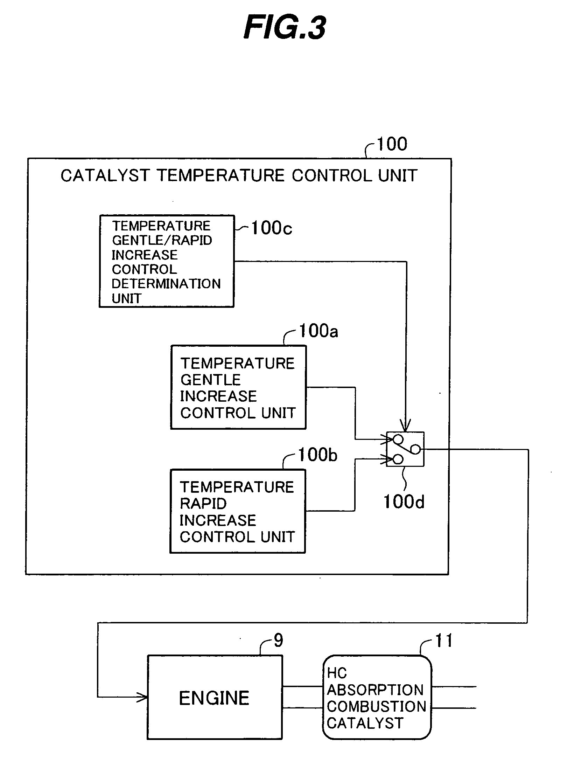

Next, Fig. 3 shows the concept of the present invention, in which the catalyst temperature control unit 100 shown in Fig. 1 is shown more concretely. That is, the unit 100 is constituted by a temperature gentle increase control unit 100a, a temperature rapid increase control unit 100b, a temperature gentle/rapid increase control determination unit 100c and a temperature gentle/rapid increase control switching unit 100d. Since the catalyst temperature control unit 100 is constituted in this manner, the temperature of the HC absorption combustion catalyst 11 is controlled in a manner that the temperature increasing rate of the HC absorption combustion catalyst 11 is switched in accordance with the respective phases. In particular, the temperature increasing rate of the HC absorption combustion catalyst 11 at the time of the HC absorption phase of the HC absorption combustion catalyst 11 is made smaller than that of the HC absorption combustion catalyst 11 at the time of the HC release phase of the HC absorption combustion catalyst 11. According to this configuration, the temperature of the HC absorption combustion catalyst 11 can be increased gently after the starting of the engine thereby to secure sufficient time period of the absorption phase, whereby the absorption amount of HC can be increased. Further, when the catalyst temperature of the HC absorption combustion catalyst 11 exceeds the maximum temperature of the absorption temperature, the temperature of the HC absorption combustion catalyst 11 is rapidly increased to the minimum temperature of the purification phase, so that an amount of HC released in the release phase can be reduced.

To be concrete, the temperature control of the HC absorption combustion catalyst 11 is realized by constituting the catalyst temperature control unit 100 by the temperature gentle increase control unit 100a which increases the temperature of the HC absorption combustion catalyst 11 at a first increasing rate, the temperature rapid increase control unit 100b which increases the temperature of the HC absorption combustion catalyst 11 at a rate larger than the first increasing rate, the temperature gentle/rapid increase control determination unit 100c for determining one of the temperature gentle increase control unit 100a and the temperature rapid increase control unit 100b which performs the temperature control of the HC absorption combustion catalyst 11, and the temperature gentle/rapid increase control switching unit 100d which switches between the temperature gentle increase control unit 100a and the temperature rapid increase control unit 100b in accordance with the determination result of the temperature gentle/rapid increase control determination unit 100c.

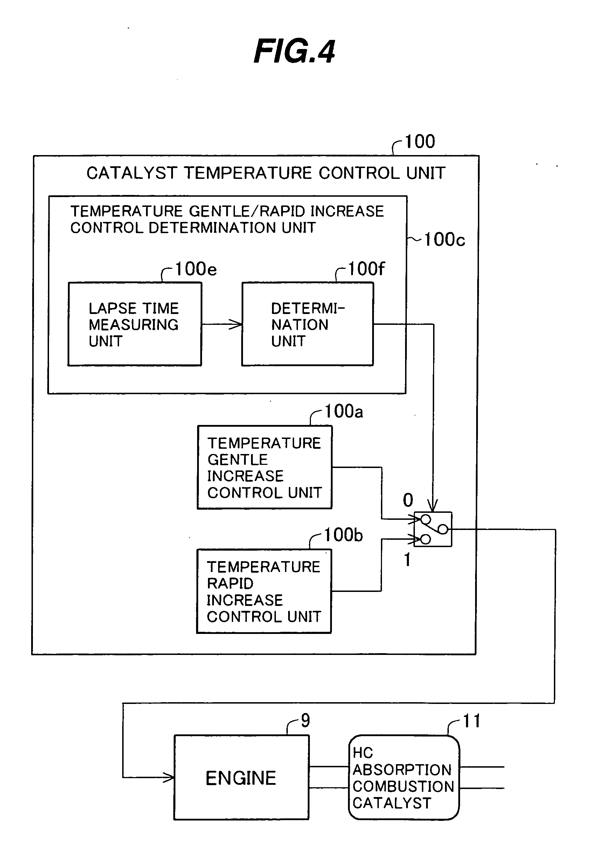

Next, the first concrete configuration of the temperature gentle/rapid increase control determination unit 100c of the catalyst temperature control unit 100 will be shown in Fig. 4. The temperature gentle/rapid increase control determination unit 100c is constituted by a lapse time measuring unit 100e for measuring a time period lapsed after the start of the engine, and a determination unit 100f for determining whether or not the lapse time after the start of the engine measured by the lapse time measuring unit 100e exceeds a predetermined value. Since there is a correlation between the lapsed time after start of the engine and the temperature of the HC absorption combustion catalyst, it is possible to determine the phase of the HC absorption combustion catalyst based on the lapsed time after start of the engine, whereby the temperature of the HC absorption combustion catalyst 11 can be controlled in accordance with the determined phase.

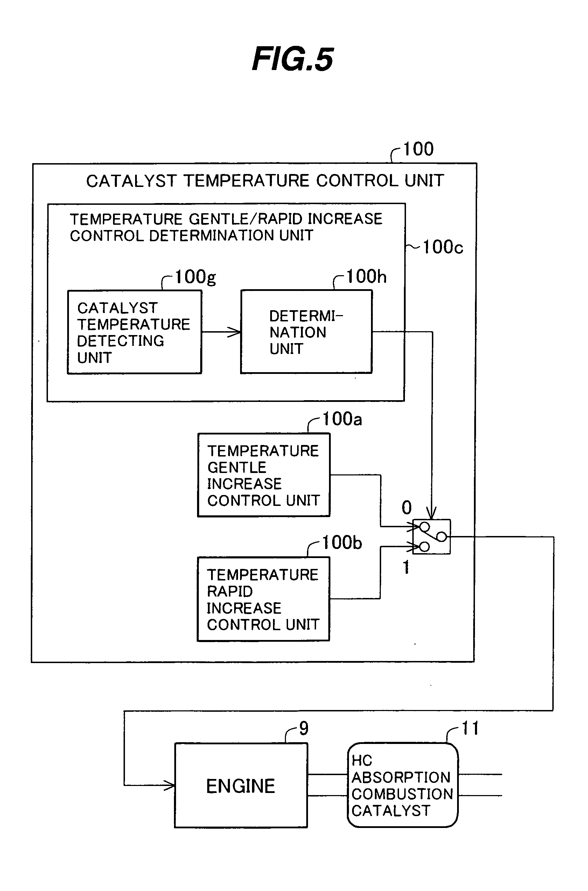

Next, the second concrete configuration of the temperature gentle/rapid increase control determination unit 100c will be shown in Fig. 5. The temperature gentle/rapid increase control determination unit 100c is constituted by a catalyst temperature detecting unit 100g for detecting the temperature of the HC absorption combustion catalyst 11 and a determination unit 100h for determining whether or not the temperature of the HC absorption combustion catalyst detected by the catalyst temperature detecting unit 100g exceeds a predetermined value. The temperature of the HC absorption combustion catalyst 11 is measured directly or indirectly. Thus, since the each phase of the HC absorption combustion catalyst 11 can be determined accurately, the temperature of the HC absorption combustion catalyst 11 can be controlled.

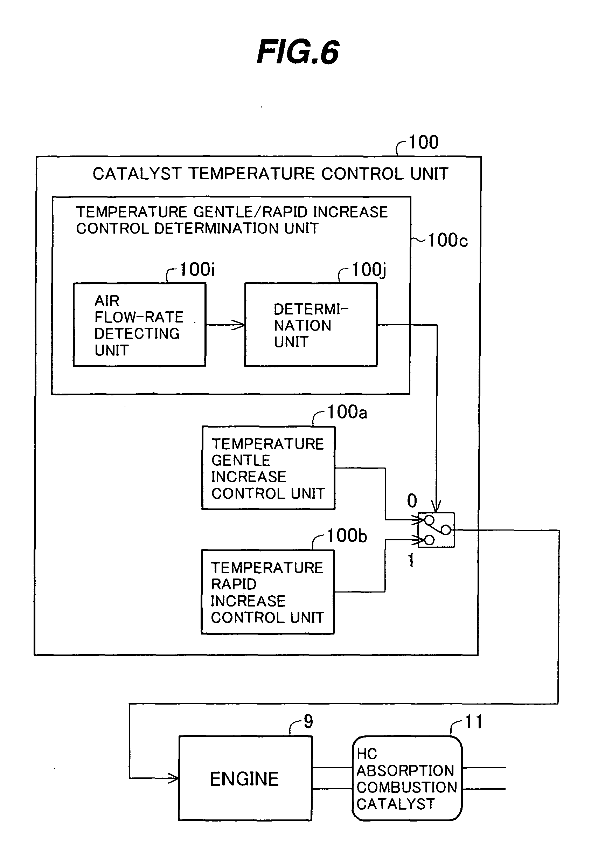

Next, the third concrete configuration of the temperature gentle/rapid increase control determination unit 100c will be shown in Fig. 6. The temperature gentle/rapid increase control determination unit 100c is constituted by an air flow rate detecting unit 100i for detecting a flow rate of the air flowing into the engine and a determination unit 100j for determining whether or not the air flow rate detected by the air flow rate detecting unit 100i exceeds a predetermined value. When an amount of the air flowing into the engine is small, the gentle increase of the temperature of the HC absorption combustion catalyst can be realized easily. On the other had, when an amount of the air flowing into the engine is large, the rapid increase of the temperature of the HC absorption combustion catalyst can be realized easily. Thus, the temperature of the HC absorption combustion catalyst 11 can be realized in accordance with the air flow rate.

### (First embodiment)

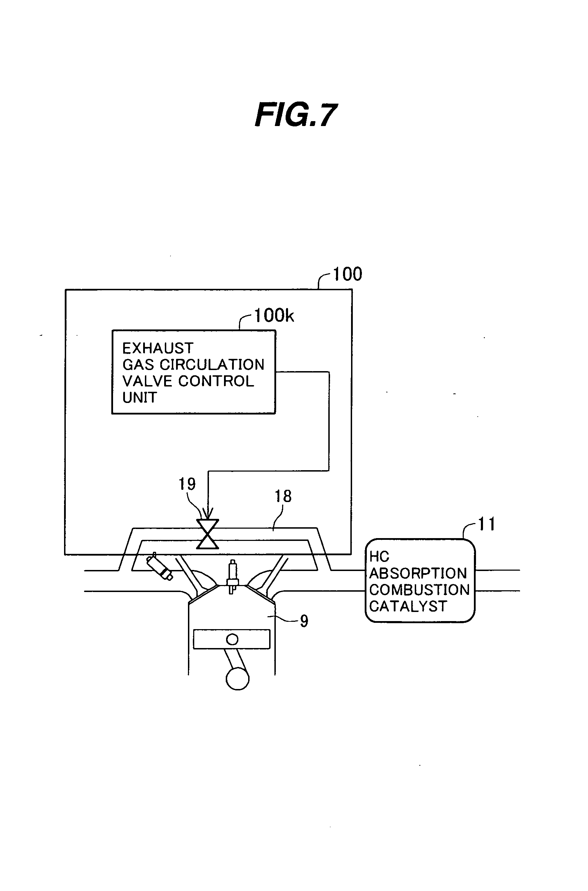

Next, the embodiment of the present invention will be explained with reference to the accompanying drawings. That is, the temperature gentle increase control is performed by using an EGR (exhaust gas recirculation), in which the combustion temperature is reduced, based on the temperature on the downstream side of the HC absorption combustion catalyst 11, thereby sufficiently exerting the HC absorbance efficiency. The concept of this embodiment resides in that, as shown in Fig. 7, a part of the exhaust gas of the engine 9 is circulated on the suction side of the engine 9 through an exhaust gas circulation pipe 18. An amount of circulation is controlled by controlling an EGR valve 19 by an exhaust gas circulation valve control unit 100k.

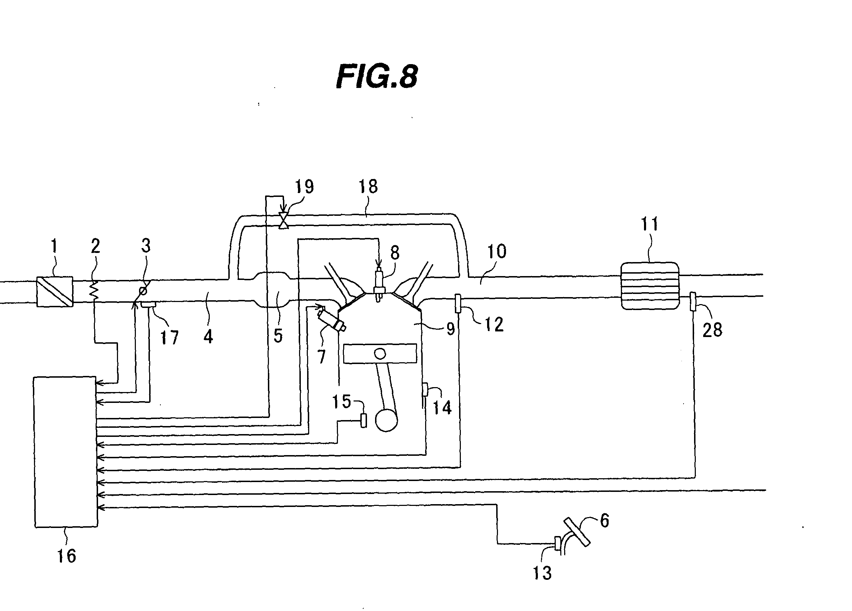

Fig. 8 is a diagram showing the summary of the engine system. In the engine 9 constituted by four cylinders, the air introduced from the outside passes an air cleaner 1 and flows into the cylinders through the suction pipe 4 and a collector 5. The flow rate of the air flowing into the cylinders is adjusted by an electronic throttle valve 3. The air flow rate is detected by an air flow sensor2. A crank angle sensor 15 outputs a signal each one revolution of a crank shaft. A water temperature sensor 14 detects the temperature of a cooling water for the engine. An acceleration pedal depression degree sensor 13 detects an amount of depression of an accelerator pedal 6 thereby to detect a torque required by a driver. Signals from the acceleration pedal depression degree sensor 13, the air flow sensor 2, the throttle valve opening degree sensor 17 attached to the electronic throttle valve 3, the crank angle sensor 15 and the water temperature sensor 14 are supplied to a control unit 16. The control unit 16 obtains the operation state of the engine from the outputs of these sensors thereby to calculate suitable values of main operation values, that is, an air flow rate, a fuel injection value and an ignition timing. The fuel injection value thus calculated is converted into a valve opening pulse signal within the control unit 16 and then supplied to fuel injection valves 7 attached within the cylinders. Further, driving signal is supplied to ignition plugs 8 so that the ignition plugs 8 are ignited at ignition timing calculated by the control unit 16, respectively. The injected fuel is mixed with the air supplied from the suction pipe 4 and flows into the cylinders of the engine 9 to form air fuel mixture. The air fuel mixture is exploded by a spark generated at a predetermined timing from the plug f8. The combustion pressure acts to push down the piston thereby to serve as power for the engine. The exhaust gas generated by the explosion is fed to the HC absorption combustion catalyst 11 through an exhaust pipe 10. A part of the exhaust gas is circulated on the suction air side through the exhaust gas circulation pipe 18. An amount of the circulation (an amount of EGR) is controlled by the EGR valve 19. The sensor 12 is provided between the engine 9 and the three way catalyst 11. The sensor 12 has linear output characteristics with respect to the density of oxygen contained within the exhaust gas. The relation between the air fuel ratio and the density of oxygen contained within the exhaust gas is almost linear. Thus, it is possible to obtain an air fuel ratio by the sensor 12 for detecting the oxygen density. The HC absorption combustion catalyst 11 absorbs HC when the catalyst temperature is low, whilst releases HC when the catalyst temperature is the predetermined value or more. The HC absorption combustion catalyst 11 has a three way catalyst function and so has a function of purifying the released HC. A temperature sensor 28 is provided on the downstream side of the HC absorption combustion catalyst 11. The control unit 16 calculates an air fuel ratio at the upstream portion of the HC absorption combustion catalyst 11 based on the signal from the sensor 12 thereby to perform the F/B control for sequentially correcting the fuel injection amount or the air flow rate so that the air fuel ratio of the air fuel mixture within the cylinders becomes a target air fuel ratio. Further, the output signal of the temperature sensor 28 is also supplied to the control unit 16, whereby the respective operation parameters of the engine are controlled in accordance with the temperature at the inlet of the HC absorption combustion catalyst.

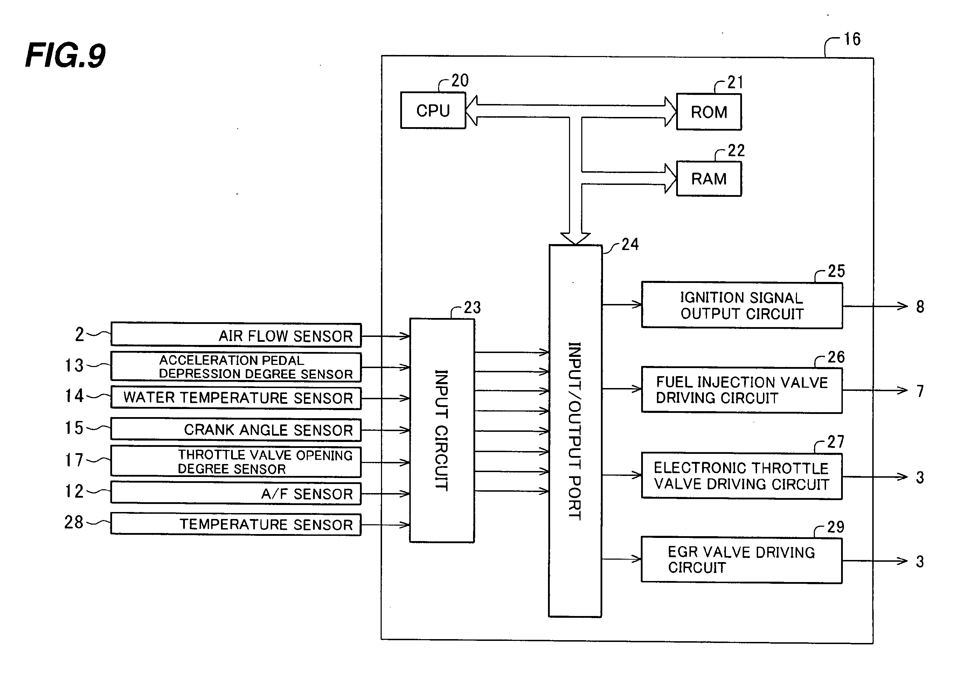

Fig. 9 is a diagram showing the inner portion of the control unit 16. The output values from the sensor 12, the temperature sensor 28, the throttle valve opening degree sensor 17, the air flow sensor 2, the acceleration pedal depression degree sensor 13, the water temperature sensor 14 and the crank angle sensor 15 are supplied to the control unit 16, then are subjected to the signal processing such as noise removal by an input circuit 23 and thereafter supplied to an input/output port 24. The values inputted into the input port 24 are held in a RAM 22 and then subjected to the calculation processing within the CPU 20. The control program describing the contents of the calculation processing is written into a ROM 21 in advance. The values representing the operation amounts of the respective actuators calculated in accordance with the control program are once stored in the RAM 22 and then outputted to the output port 24. As an operation signal for the ignition plug used at the time of combustion by the spark ignition, an on/off signal is set which is in an on state when current is expected to flow through the primary coil within an ignition signal output circuit 25 and in an off state when no current is expected to flow therethrough. The ignition timing is a time point where the on/off signal changes from the on state to the off state. The signal for the ignition plug set in the output port is amplified by the ignition signal output circuit 25 so as to have energy sufficient for the combustion and then supplied to the ignition plug. As a drive signal for the fuel injection valve, an on/off signal is set which is in an on state when the valve is expected to be opened and in an off state when the valve is expected to be closed. The drive signal is amplified by a fuel injection valve driving circuit 26 so as to have energy sufficient for opening the fuel injection valve and then supplied to the fuel injection valve 7. A drive signal for realizing the target opening degree of the electronic throttle valve 3 is supplied to the electronic throttle valve 3 through an electronic throttle valve driving circuit 27. Further, the control unit 16 includes an EGR valve driving circuit 29 for driving the EGR valve 19.

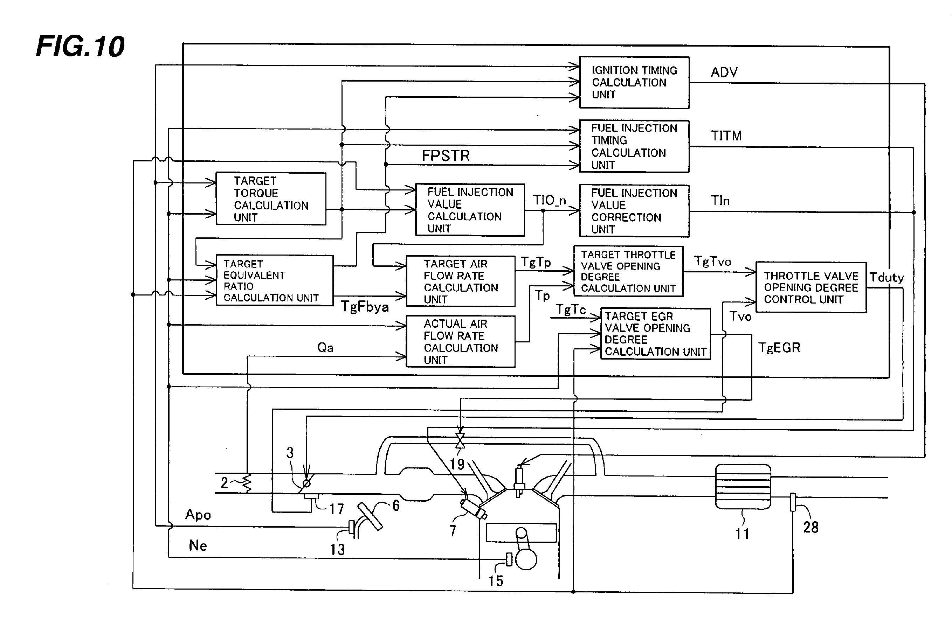

Next, the explanation will be made as to the control program written into the ROM 21. Fig. 10 is a block diagram showing the entirety of the control units, which is the main portion of the fuel preceding type torque base control. This control is constituted by the an ignition timing calculation unit, a fuel injection timing calculation unit, a target torque calculation unit, a fuel injection value calculation unit, a fuel injection value correction unit, a target equivalent ratio calculation unit, a target air flow rate calculation unit, a target throttle valve opening degree calculation unit, a throttle valve opening degree control unit, an actual air flow rate calculation unit and a target EGR valve opening degree calculation unit.

The target torque calculation unit calculates a target torque TgTc based on an acceleration pedal depression degree Apo and an engine rotation speed Ne. The fuel injection value calculation unit calculates a fuel injection value for realizing the target torque.

The fuel injection value correction unit corrects the phase of injection fuel so that a fuel injection value TIO_n (n: cylinder number) at each cylinder matches with the phase of air within the corresponding cylinder. The fuel injection value at each cylinder after this correction is referred to as TI_n.

The target equivalent ratio calculation unit calculates a target equivalent ratio based on the target torque TgTc and the engine rotation speed Ne. A ratio between fuel and air is treated by an equivalent ratio because such a ratio is convenient for the calculation. Of course, the ratio between fuel and air may be treated by an air fuel ratio. The target equivalent ratio calculation unit also determines as to which one of the homogeneous combustion and the stratified charge combustion is employed (a stratified charge combustion allowance flag: FPSTR).

The target air flow rate calculation unit calculates a target air amount TgTp based on the fuel injection value TIO and a target correction unit ratio TgFbya. Although explained later, the target air amount TgTp is a value standardized to an air amount flowing into a cylinder per one cycle, for the sake of convenience.

The actual air flow rate calculation unit converts Qa which is an mass air flow rate detected by the air flow sensor into an actual air amount Tp flowing into a cylinder per one cycle, like TgTp.

The target throttle valve opening degree calculation unit calculates a target throttle valve opening degree TgTvo based on the target air amount TgTp and the actual air amount Tp.

The throttle valve opening degree control unit calculates a throttle valve operation value Tduty based on the target throttle valve opening degree TgTvo and an actual throttle valve opening degree Tvo. The value Tduty represents a duty ratio of a PWM signal inputted into a driving circuit for controlling a throttle motor driving current.

The ignition timing calculation unit calculates an optimum ignition timing in accordance with the respective operation conditions.

The fuel injection timing calculation unit calculates an optimum fuel injection timing in accordance with the respective operation conditions.

Since the detailed specifications of these control blocks in this figure are disclosed already in various prior documents, the explanation thereof is omitted.

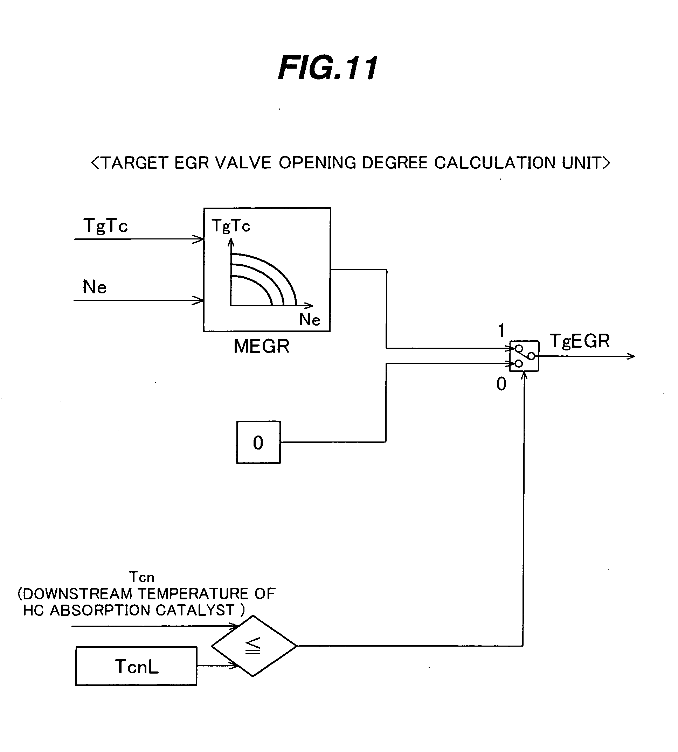

Next, the target EGR valve opening degree calculation unit in the control blocks shown in Fig. 10 will be explained with reference to Fig. 11.

As shown in Fig. 11, when Tcn □ TcnL, a value obtained from a target EGR ratio map MEGR is set as a target EGR ratio TgEGR. In this case, TgTc and Ne are used as arguments. In contrast, when Tcn > TcnL, TgEGR is set to 0. Here, TgEGR represents a target EGR ratio, TgTc represents the downstream temperature of the HC absorption catalyst, TgTc represents the target torque and Ne represents the engine rotation speed. TcnL is preferably set to a temperature where HC absorbed within the HC absorption combustion catalyst starts to release. Although TcnL varies depending on the position of the sensors, TcnL is generally set to in a range of 100 to 200 C, but it is preferably determined depending on the efficiency of the actual engine.

### (Second embodiment)

According to the second embodiment, the stratified charge combustion is performed based on the downstream side temperature of the HC absorption catalyst 11 thereby to perform the temperature gentle increase control in which the combustion temperature is reduced, thereby sufficiently exerting the HC absorbance efficiency.

In this embodiment, the gist of the engine system, the control unit thereof, and the block diagram showing the entirety of the control system are same as the first embodiment.

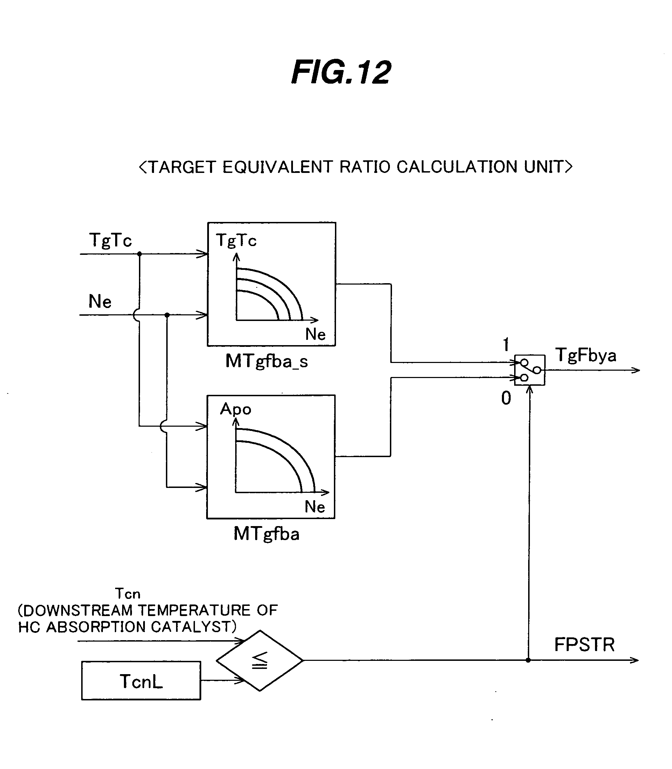

Hereinafter, the target equivalent ratio calculation unit in the control blocks shown in Fig. 10 will be explained with reference to Fig. 12. The target equivalent ratio calculation unit determines the combustion state and calculates the target equivalent ratio. FPSTR represents the stratified charge combustion allowance flag. When FPSTR is set to 1, the fuel injection timing, the ignition timing, the fuel injection amount and the air amount are controlled so as to perform the stratified charge combustion. To be concrete, represents the stratified charge combustion allowance flag FPSTR is set to 1 when Tcn □ TcnL. In contrast, when Tcn > TcnL, FPSTR is set to 0. Here, Tcn represents the downstream temperature of the HC absorption catalyst, TgTc represents the target torque and Ne represents the engine rotation speed. TcnL is preferably set to the temperature where HC absorbed within the HC absorption combustion catalyst starts to release. Although TcnL varies depending on the position of the sensors, TcnL is generally set to in a range of 100 to 200 C. When the stratified charge combustion is allowed, a value obtained based on the target torque TgTc and the engine rotation speed Ne by referring to a target equivalent ratio map Mtgfba_s for the stratified charge combustion is set as a target equivalent ratio Tgfbya. When Tgfbya is 0, the homogeneous combustion is performed in a manner that a value obtained based on the target torque TgTc and the engine rotation speed Ne by referring to a target equivalent ratio map Mtgfba for the homogeneous combustion is set as a target equivalent ratio Tgfbya. The setting values of each of the target equivalent ratio map Mtgfba_s for the stratified charge combustion and the target equivalent ratio map Mtgfba for the homogeneous combustion are desirably determined based on the data of the actual engine. In this embodiment, the stratified charge combustion is allowed only depending on the temperature of the HC absorption combustion catalyst. Alternatively, an operation region capable of performing the stratified charge combustion may be determined based on another condition in view of improving a fuel cost, and the stratified charge combustion may be allowed in accordance with the determination. For example, such a specification may be added that, when a water temperature Twn, the acceleration pedal depression degree Apo and the engine rotation speed Ne satisfy a predetermined condition, FPSTR is set to 1 thereby to allow the stratified charge combustion.

### (Third embodiment)

The third embodiment performs, based on the temperature on the downstream side of the HC absorption combustion catalyst 11, the temperature gentle increase control using the EGR in which the combustion temperature is reduced and the temperature rapid increase control using the ignition retard, thereby sufficiently exerting the HC absorbance efficiency and the HC combustion efficiency.

In this embodiment, the gist of the engine system, the control unit thereof, and the block diagram showing the entirety of the control system are same as the first embodiment.

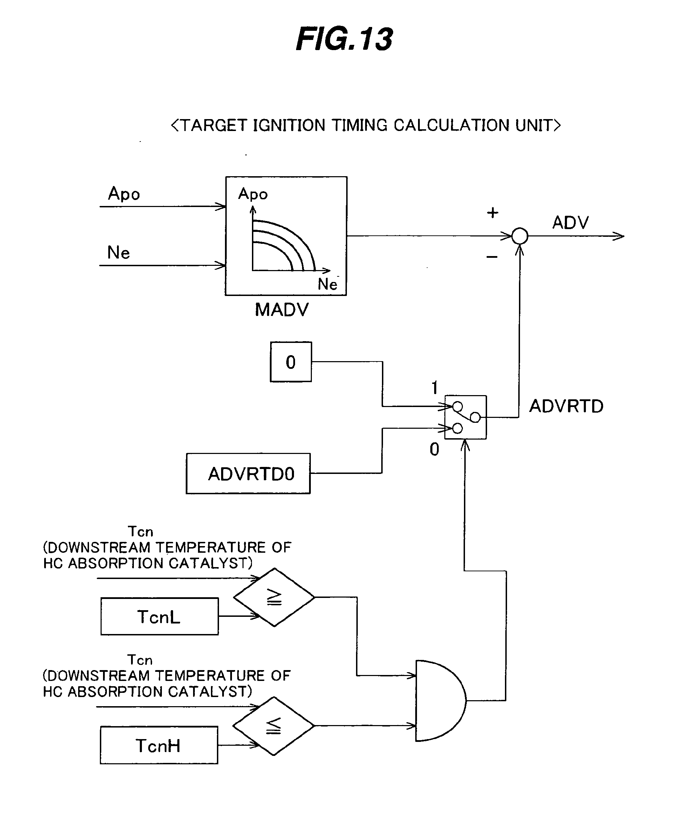

Hereinafter, the target ignition timing calculation unit in the control blocks shown in Fig. 10 will be explained with reference to Fig. 13. The target ignition timing calculation unit calculates the ignition timing. As shown in Fig. 13, the ignition timing ADV is obtained based on the target torque TgTc and the engine rotation speed Ne by referring to an ignition timing map MADV. ADVTRTD represents a retard amount. ADVTRTD is set to ADVTRTDO when Tcn □ TcnL and Tcn □ TcnH. In contrast, when Tcn < TcnL or Tcn > TcnH, ADVTRTD is set to 0. Here, Tcn represents the downstream temperature of the HC absorption catalyst, TgTc represents the target torque and Ne represents the engine rotation speed. TcnL is preferably set to the temperature where HC absorbed within the HC absorption combustion catalyst starts to release. Although TcnL varies depending on the position of the sensors, TcnL is generally set to in the range of 100 to 200 C, but it is preferably determined depending on the efficiency of the actual engine. TcnH is desirably set to the active temperature of the three way catalyst and is in a range of 250 to 400 C although it depends on the catalyst efficiency.

### (Fourth embodiment)

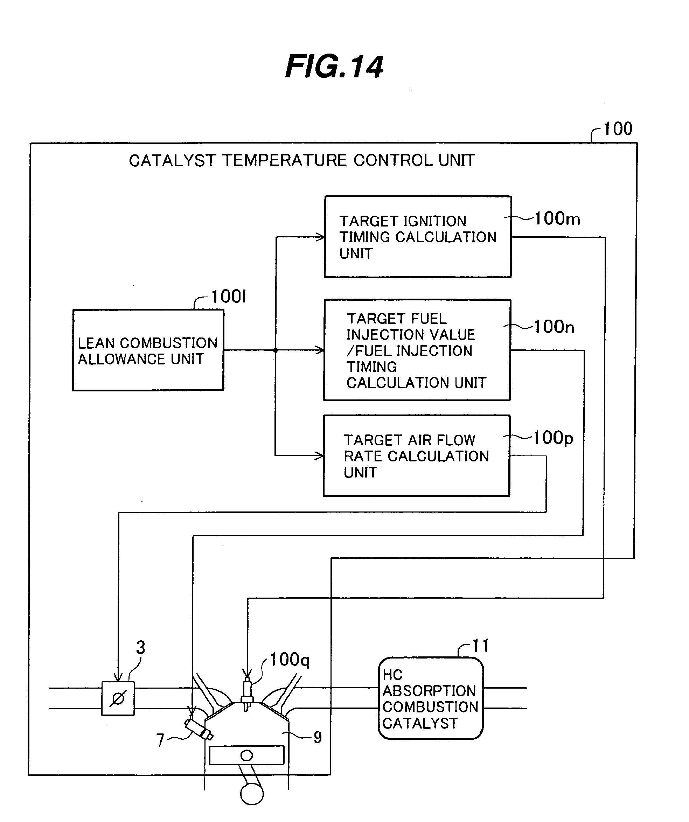

Another concrete configuration of the catalyst temperature control unit 100 will be shown in Fig. 14. The catalyst temperature control unit 100 corresponds to the temperature rapid increase control unit. The engine 9 is a lean burn engine in which combustion is performed with the air fuel mixture having an air fuel ratio thinner than the stoichiometric air-fuel ratio. The catalyst temperature control unit 100 includes a lean combustion allowance unit 1001 which determines to allow the lean combustion for the lean burn engine, a target ignition timing calculation unit 100m for calculating the target ignition timing based on the determination result of the lean combustion allowance unit 1001, a target fuel injection value/fuel injection timing calculation unit 100n for calculating the target fuel injection amount and the target fuel injection timing based on the determination result of the lean combustion allowance unit 1001, a target air flow rate calculation unit 100p for calculating the target air amount based on the determination result of the lean combustion allowance unit 1001, an ignition timing control device 100q for controlling the ignition timing based on the calculation result of the target ignition timing calculation unit 100m, fuel injection valves for controlling the fuel injection value and the fuel injection timing based on the calculation result of the target fuel injection value/fuel injection timing calculation unit 100n, and an air flow rate control device for controlling the air flow rate based on the calculation result of the target air flow rate calculation unit 100p. The air flow rate control device corresponds to an electronic throttle valve.

When the lean combustion is performed, the combustion temperature of the HC absorption combustion catalyst reduces, the lean combustion is used as the temperature gentle increasing means of the HC absorption combustion catalyst. In order to perform the lean combustion, the air flow rate, the fuel injection value, or the ignition timing is required to be controlled optimally.

### (Fifth embodiment)

The fifth embodiment performs, based on the temperature on the downstream side of the HC absorption combustion catalyst 11, the temperature gentle increase control using the EGR in which the combustion temperature is reduced and the temperature rapid increase control using the reaction temperature of the tree way catalyst in which the air fuel ratios of the respective cylinders are differentiated in rich and lean states respectively, thereby sufficiently exerting the HC absorbance efficiency and the HC combustion efficiency.

Fig, 15 is the schematic diagram of the engine system, which further includes a three way catalyst 30 on the upstream side of the HC absorption combustion catalyst 11 in the schematic diagram (Fig. 8) of the engine system of the first embodiment. The control unit 16 and the block diagram showing the entirety of the control system are same as the first embodiment.

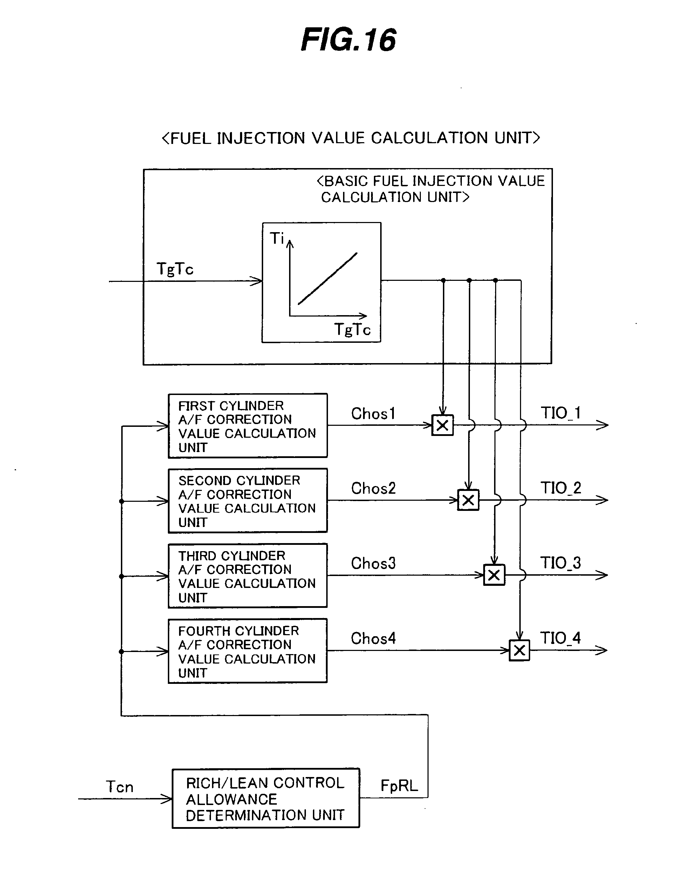

Hereinafter, the target fuel injection amount calculation unit in the control blocks shown in Fig. 10 will be explained with reference to Fig. 16.

As shown in Fig. 16, the target fuel injection amount calculation unit includes a basic fuel injection value calculation unit, a first cylinder A/F correction value calculation unit, a second cylinder A/F correction value calculation unit, a third cylinder A/F correction value calculation unit, a fourth cylinder A/F correction value calculation unit and a rich/lean control allowance determination unit. When the rich/lean control is not allowed, the fuel injection values of the respective cylinders are calculated so that the air fuel ratios of all the cylinder become same. In contrast, when the rich/lean control is allowed, both the exhaust gas of the rich air fuel mixture and the exhaust gas of the lean air fuel mixture is supplied to the inlet of the three way catalyst 30 and the air fuel ratios of the respective cylinders are changed by a predetermined value in order to improve the reaction heat of the three way catalyst 30. The rich/lean control allowance determination unit determines whether or not the rich/lean control is to be allowed.

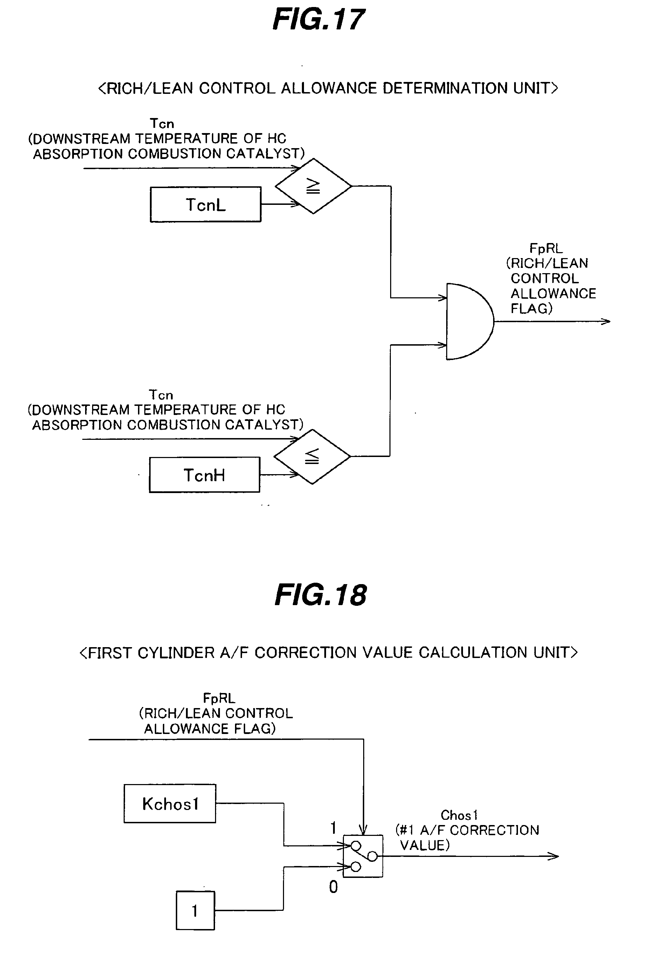

As shown in Fig. 17, the rich/lean control allowance determination unit sets a rich/lean control allowance flag FpRL to 1 when Tcn □ TwnL and Tcn □ TwnH thereby to allow the rich/lean control. In contrast, when Tcn < TwnL or Tcn > TwnH, the rich/lean control is inhibited an dteh flag FpRL is set to 0. Here, Tcn represents the downstream temperature of the HC absorption catalyst.

TcnL is preferably set to the temperature where HC absorbed within the HC absorption combustion catalyst starts to release. Although TcnL varies depending on the position of the sensors, TcnL is generally set to in the range of 100 to 200 C, but it is preferably determined depending on the efficiency of the actual engine. TcnH is desirably set to the active temperature of the three way catalyst and is in a range of 250 to 400 C although it depends on the catalyst efficiency.

The first cylinder A/F correction value calculation unit will be explained with reference to Fig. 18.

In the blocks of this figure, the A/F (air fuel ratio) correction value of the first cylinder is calculated. When FpRL is set to 0, a first cylinder A/F correction value Chosl is set to 0 and the fuel injection value of the respective cylinders are calculated based on the actual air amount Tp and Lalpha so that the air fuel ratio becomes the stoichiometric air-fuel ratio. In contrast, when FpRL is set to 1, the air fuel ratio of the first cylinder is changed by a predetermined amount Kchosl so as to supply rich/lean exhaust gas at the inlet of the three way catalyst 30. That is, when FpRL is set to 1, a first cylinder equivalent ratio change amount Chos1 is set to Kchosl, whilst when FpRL is set to 0, Chosl is set to 0. The value of Kchos1 is preferably set in view of the temperature increasing rate of the three way catalyst and the exhaust efficiency in accordance with the characteristics of the engine and the three way catalyst.

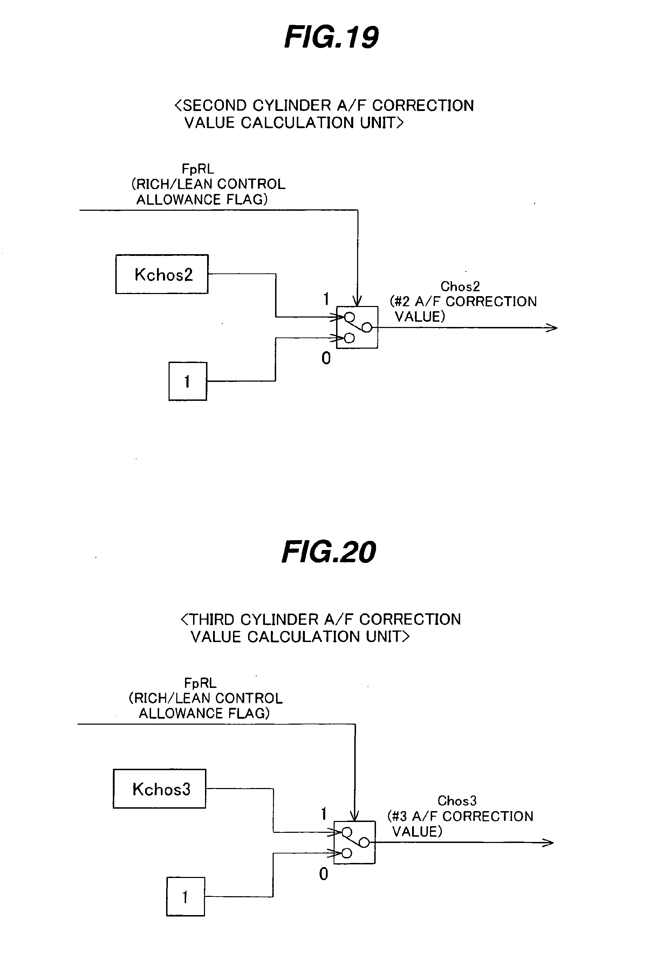

Next, the second cylinder A/F correction value calculation unit will be explained with reference to Fig. 19.

In the blocks of this figure, the A/F correction value of the second cylinder is calculated. When FpRL is set to 0, a second cylinder A/F correction value Chos2 is set to 0 and the fuel injection value of the respective cylinders are calculated based on the actual air amount Tp and Lalpha so that the air fuel ratio becomes the stoichiometric air fuel ratio. In contrast, when FpRL is set to 1, the air fuel ratio of the second cylinder is changed by a predetermined amount Kchos2 so as to supply rich/lean exhaust gas at the inlet of the three way catalyst 30. That is, when FpRL is set to 1, a second cylinder equivalent ratio change amount Chos2 is set to Kchos2, whilst when FpRL is set to 0, Chos2 is set to 0. The value of Kchos2 is preferably set in view of the temperature increasing rate of the three way catalyst and the exhaust efficiency in accordance with the characteristics of the engine and the three way catalyst.

Next, the third cylinder A/F correction value calculation unit will be explained with reference to Fig. 19.

In the blocks of this figure, the A/F correction value of the third cylinder is calculated. When FpRL is set to 0, a third cylinder A/F correction value Chos3 is set to 0 and the fuel injection value of the respective cylinders are calculated based on the actual air amount Tp and Lalpha so that the air fuel ratio becomes the stoichiometric air fuel ratio. In contrast, when FpRL is set to 1, the air fuel ratio of the third cylinder is changed by a predetermined amount Kchos3 so as to supply rich/lean exhaust gas at the inlet of the three way catalyst 30. That is, when FpRL is set to 1, a third cylinder equivalent ratio change amount Chos3 is set to Kchos3, whilst when FpRL is set to 0, Chos3 is set to 0. The value of Kchos3 is preferably set in view of the temperature increasing rate of the three way catalyst and the exhaust efficiency in accordance with the characteristics of the engine and the three way catalyst.

Finally, the fourth cylinder A/F correction value calculation unit will be explained with reference to Fig. 19.

In the blocks of this figure, the A/F correction value of the fourth cylinder is calculated. When FpRL is set to 0, a fourth cylinder A/F correction value Chos4 is set to 0 and the fuel injection value of the respective cylinders are calculated based on the actual air amount Tp and Lalpha so that the air fuel ratio becomes the stoichiometric air fuel ratio. In contrast, when FpRL is set to 1, the air fuel ratio of the fourth cylinder is changed by a predetermined amount Kchos4 so as to supply rich/lean exhaust gas at the inlet of the three way catalyst 30. That is, when FpRL is set to 1, a fourth cylinder equivalent ratio change amount Chos4 is set to Kchos4, whilst when FpRL is set to 0, Chos4 is set to 0. The value of Kchos4 is preferably set in view of the temperature increasing rate of the three way catalyst and the exhaust efficiency in accordance with the characteristics of the engine and the three way catalyst.

### (Sixth embodiment)

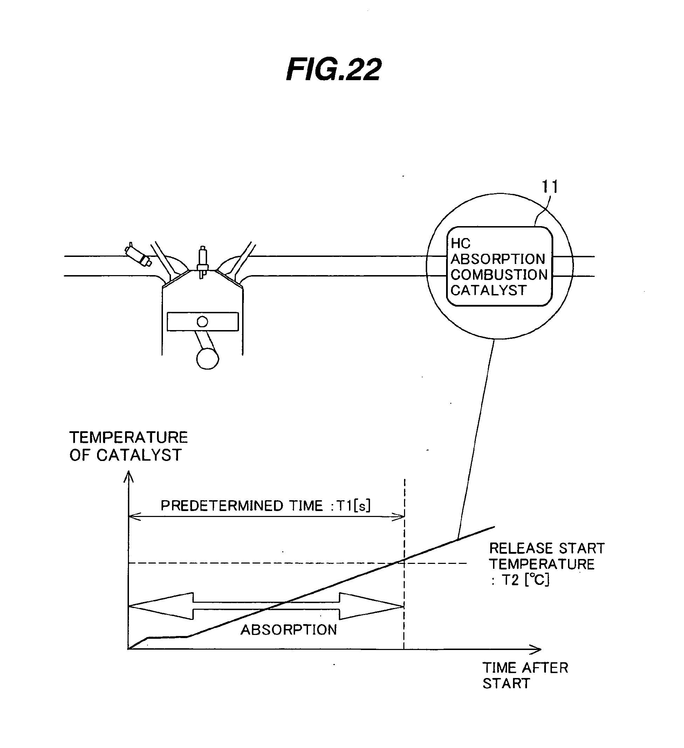

Although the engine system in this embodiment is same as that (Fig. 8) of the first embodiment, the position of the HC absorption combustion catalyst 11 is adjusted as shown in Fig. 22 so that the temperature of the HC absorption combustion catalyst reaches the release start temperature T2 ( C) upon the lapse of T1 (sec.) after start of the engine. That is, this embodiment is arranged in a manner that, for example, a time period corresponding to the idling time after the start of the engine is set T1 in a particular running mode etc. , and the release of HC is suppressed by using the temperature increase of the exhaust gas due to the acceleration thereafter, thereby to purify the exhaust gas with high efficiency.

### (Seventh embodiment)

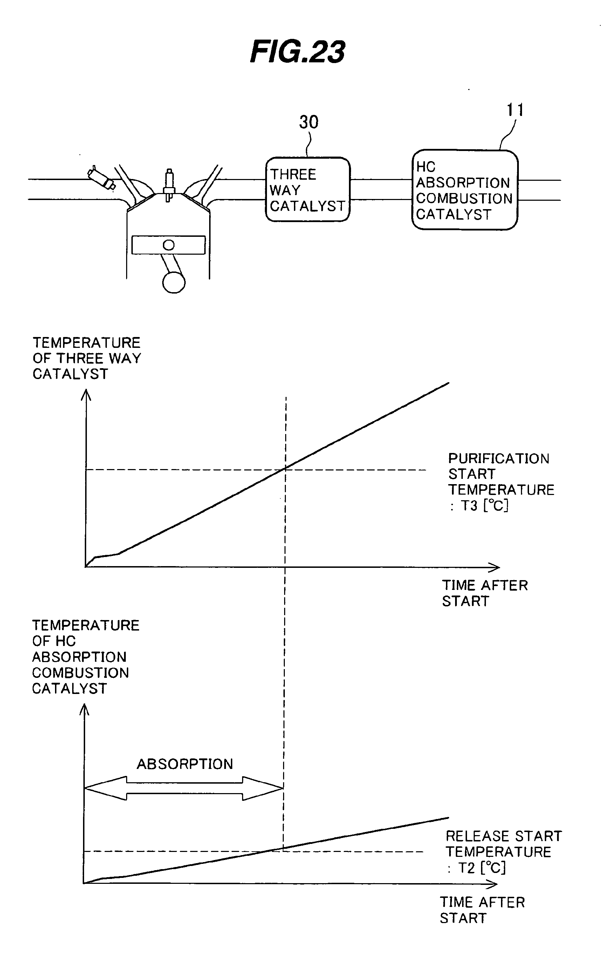

Although the engine system in this embodiment is same as that (Fig. 16) of the fifth embodiment, the position of the HC absorption combustion catalyst 11 is adjusted as shown in Fig. 23 so that the temperature of the HC absorption combustion catalyst reaches the release start temperature T2 ( C) when the temperature of the three way catalyst 30 reaches a purification start temperature T3 ( C). That is, HC exhausted from the engine is absorbed in the HC absorption combustion catalyst until the three way catalyst 30 is activated, whilst after the three way catalyst 30 is activated, since the release and purification function is exerted, HC can be purified with high efficiency.

As explained above, according to the present invention, there is provide a method and apparatus for controlling the temperature of an HC absorption combustion catalyst and an engine system which can absorb HC with high efficiency to purify exhaust gas by using the HC absorption combustion catalyst.

## Claims

1. A catalyst temperature control apparatus (100) for controlling a temperature of an HC absorption combustion catalyst (11) which is provided in an exhaust pipe (10) of an internal combustion engine (9) and which shifts from an HC absorption phase to an HC purification phase through an HC release phase as a temperature of the HC absorption combustion catalyst (11) increases from a low value to a high value, wherein
a temperature of the HC absorption combustion catalyst (11) is controlled in accordance with the HC absorption phase, the HC release phase and the HC purification phase.

2. A catalyst temperature control apparatus (100) according to claim 1, wherein
a temperature of the HC absorption combustion catalyst (11) is controlled by switching the temperature increasing rate of the HC absorption combustion catalyst (11) in accordance with the HC absorption phase, the HC release phase and the HC purification phase.

3. A catalyst temperature control apparatus (100) according to claim 1, wherein
a temperature of the HC absorption combustion catalyst (11) is controlled in a manner that a temperature increasing rate of the HC absorption combustion catalyst (11) at a time of the HC absorption phase of the HC absorption combustion catalyst (11) is made smaller than a temperature increasing rate of the HC absorption combustion catalyst (11) at a time of the HC release phase of the HC absorption combustion catalyst (11).

4. A catalyst temperature control apparatus (100) according to at least one of claims 1 to 3, comprising:
a temperature gentle increase control unit (100a) which increases a temperature of the HC absorption combustion catalyst (11) at a first increasing rate;
a temperature rapid increase control unit (100b) which increases a temperature of the HC absorption combustion catalyst (11) at a rate larger than the first increasing rate;
a temperature gentle/rapid increase control determination unit (100c) for determining one of the temperature gentle increase control unit (100a) and the temperature rapid increase control unit (100b) which performs temperature control of the HC absorption combustion catalyst (11); and
a temperature gentle/rapid increase control switching unit (100d) which switches between the temperature gentle increase control unit (100a) and the temperature rapid increase control unit (100b) in accordance with determination result of the temperature gentle/rapid increase control determination unit (100c).

5. A catalyst temperature control apparatus (100) according to claim 4, wherein
the temperature gentle/rapid increase control determination unit (100c) is constituted by a lapse time measuring unit (100e) for measuring a time period lapsed after start of the engine (9), and a determination unit (100f) for determining whether or not the lapse time after the start of the engine (9) measured by the lapse time measuring unit (100e) exceeds a predetermined value.

6. A catalyst temperature control apparatus (100) according to claim 4, wherein
the temperature gentle/rapid increase control determination unit (100c) is constituted by a catalyst temperature detecting unit (100g) for detecting temperature of the HC absorption combustion catalyst (11) and a determination unit (100h) for determining whether or not the temperature of the HC absorption combustion catalyst (11) detected by the catalyst temperature detecting unit (100g) exceeds a predetermined value.

7. A catalyst temperature control apparatus (100) according to claim 4, wherein
the temperature gentle/rapid increase control determination unit (100c) is constituted by an air flow rate detecting unit (100i) for detecting a flow rate of air flowing into the engine (9) and a determination unit (100j) for determining whether or not the air flow rate detected by the air flow rate detecting unit (100i) exceeds a predetermined value.

8. A catalyst temperature control apparatus (100) according to at least one of claims 4 to 7, wherein
the temperature gentle increase control unit (100a) includes a circulation pipe (18) for circulating exhaust gas from the engine (9) to a suction side of the engine (9), a circulation valve (18) for adjusting circulation rate of the exhaust gas and a circulation valve control means (100k) for controlling the circulation valve (19).

9. A catalyst temperature control apparatus (100) according to at least one of claims 4 to 8, wherein
the temperature rapid increase control unit (100b) controls so as to retard an ignition timing.

10. A catalyst temperature control apparatus (100) according to at least one of claims 4 to 9, wherein
the temperature rapid increase control unit (100b) controls so that air fuel ratios of respective cylinders of the engine (9) are differentiated in rich and lean states respectively.

11. A catalyst temperature control apparatus (100) according to at least one of claims 4 to 10, wherein
the temperature rapid increase control unit (100b) controls so as to burn unburned HC within the exhaust pipe (10) by introducing air or 02 within the exhaust pipe (10).

12. A catalyst temperature control method for controlling a temperature of an HC absorption combustion catalyst (11) which is provided in an exhaust pipe (10) of an internal combustion engine (9) and which shifts from an HC absorption phase to an HC purification phase through an HC release phase as a temperature of the HC absorption combustion catalyst (11) increases from a low value to a high value, comprising the step of:
controlling a temperature of the HC absorption combustion catalyst (11) in accordance with the HC absorption phase, the HC release phase and the HC purification phase.

13. A catalyst temperature control method according to claim 12, wherein
a temperature of the HC absorption combustion catalyst (11) is controlled by switching the temperature increasing rate of the HC absorption combustion catalyst (11) in accordance with the HC absorption phase, the HC release phase and the HC purification phase.

14. A catalyst temperature control method according to claim 12, wherein
a temperature of the HC absorption combustion catalyst (11) is controlled in a manner that a temperature increasing rate of the HC absorption combustion catalyst (11) at a time of the HC absorption phase of the HC absorption combustion catalyst (11) is made smaller than a temperature increasing rate of the HC absorption combustion catalyst (11) at a time of the HC release phase of the HC absorption combustion catalyst (11).

15. A catalyst temperature control method according to at least one of claims 12 to 14, wherein
the temperature increasing rate of the HC absorption combustion catalyst (11) is switched in accordance with a time period lapsed after start of the engine (9).

16. A catalyst temperature control method according to at least one of claims 12 to 14, wherein
the temperature increasing rate of the HC absorption combustion catalyst (11) is switched in accordance with a temperature of the HC absorption combustion catalyst (11).

17. An engine system comprising:
an internal combustion engine (9) ;
an HC absorption combustion catalyst (11) which is provided in an exhaust pipe (10) of the engine (9) and which shifts from an HC absorption phase to an HC purification phase through an HC release phase as a temperature of the HC absorption combustion catalyst (11) increases from a low value to a high value; and
a catalyst temperature control apparatus (100) for controlling a temperature of the HC absorption combustion catalyst (11) in accordance with the HC absorption phase, the HC release phase and the HC purification phase.

18. An engine system according to claim 17, wherein
the engine (9) is a lean burn engine in which combustion is performed with air fuel mixture having an air fuel ratio thinner than a stoichiometric air-fuel ratio, and wherein
the catalyst temperature control apparatus (100) includes
a lean combustion allowance unit (1001) which determines to allow lean combustion for the lean burn engine (9),
a target ignition timing calculation unit (100m) for calculating a target ignition timing based on the determination result of the lean combustion allowance unit (1001),
a target fuel injection value/fuel injection timing calculation unit (100n) for calculating a target fuel injection amount and a target fuel injection timing based on the determination result of the lean combustion allowance unit (1001),
a target air flow rate calculation unit (100p) for calculating a target air amount based on the determination result of the lean combustion allowance unit (1001),
an ignition timing control device for controlling an ignition timing based on the calculation result of the target ignition timing calculation unit (100m),
fuel injection valves (7) for controlling fuel injection value and fuel injection timing based on the calculation result of the target fuel injection value/fuel injection timing calculation unit (100n), and
an air flow rate control device (3) for controlling an air flow rate based on the calculation result of the target air flow rate calculation unit (100p).

19. An engine system according to claim 17 or 18, wherein
the catalyst temperature control apparatus (100) is arranged in a manner that the HC absorption combustion catalyst (11) is disposed at such a position that the temperature of the HC absorption combustion catalyst (11) is the temperature of the HC absorption phase during a predetermined time period after start of the engine (9) in which HC can be absorbed within the HC absorption combustion catalyst (11).

20. An engine system according to at least one of claims 17 to 19, further comprising:
a three way catalyst (30) provided on an upstream side of the HC absorption combustion catalyst (11), wherein
the catalyst temperature control apparatus (100) is arranged in a manner that the HC absorption combustion catalyst (11) is disposed at such a position that the temperature of the HC absorption combustion catalyst (11) is the temperature of the HC absorption phase until the temperature of the three way catalyst (30) reaches a temperature at which purification function of the three way catalyst (30) starts.
